(19) Europäisches Patentamt / European Patent Office / Office européen des brevets

(11) **EP 2 158 116 B1**

(12) **FASCICULE DE BREVET EUROPEEN**

(45) Date de publication et mention de la délivrance du brevet:
**22.12.2010 Bulletin 2010/51**

(21) Numéro de dépôt: **08805807.8**

(22) Date de dépôt: **19.05.2008**

(51) Int Cl.:
**B62D 5/06** *(2006.01)*    **B62D 7/22** *(2006.01)*

(86) Numéro de dépôt international:
**PCT/FR2008/050861**

(87) Numéro de publication internationale:
**WO 2009/000985 (31.12.2008 Gazette 2009/01)**

(54) **CIRCUIT HYDRAULIQUE D'ACTIONNEMENT DE DIRECTION ASSISTEE ET VEHICULE AUTOMOBILE MUNI DE CELUI-CI**

HYDRAULISCHE ANSTEUERSCHALTUNG FÜR SERVOLENKUNG UND KRAFTFAHRZEUG DAMIT

POWER-ASSISTED STEERING HYDRAULIC ACTUATING CIRCUIT AND MOTOR VEHICLE PROVIDED THEREWITH

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.06.2007 FR 0704605**

(43) Date de publication de la demande:
**03.03.2010 Bulletin 2010/09**

(73) Titulaire: **Renault S.A.S.**
**92100 Boulogne-Billancourt (FR)**

(72) Inventeur: **MARTINEZ, Didier**
**F-27920 Saint-Etienne-sous-Bailleul (FR)**

(56) Documents cités:
**EP-A- 1 234 748    EP-A- 1 510 437**
**US-A- 5 778 756**

**Description**

L'invention concerne un circuit hydraulique d'actionnement de direction assistée pour véhicule automobile, tel que défini dans le préambule de la revendication 1 et connu par exemple du document EP 1234748 A1.

Un domaine d'application de l'invention est les directions de véhicule automobile, assistées de manière hydraulique pour aider à manoeuvrer ses roues directrices à partir du volant tourné par l'utilisateur.

Le véhicule automobile comporte habituellement une colonne de direction actionnée par le volant, qui doit déplacer en translation par un engrenage une crémaillère reliée mécaniquement aux roues pour les braquer dans le sens voulu.

Pour l'assistance, la rotation de la colonne de direction agit par l'intermédiaire d'un barreau sur une vanne hydraulique distributrice. Cette vanne est reliée hydrauliquement à un vérin d'assistance solidaire en translation de la crémaillère pour développer sur celle-ci une force supplémentaire agissant dans le même sens que la rotation de la colonne de direction.

Il arrive que le système de direction soit perturbé lors des braquages par un phénomène de vibration ou d'ondulation (en anglais : ripple), qui crée une instabilité ressentie par l'utilisateur.

Ce phénomène apparaît notamment en phase de manoeuvres de parking sur certaines adhérences au sol.

Dans l'état de la technique, il est parfois considéré que certes le problème existe, mais que l'ondulation est acceptable pour l'utilisateur, sans qu'aucune solution technique ne soit proposée.

Dans d'autres cas, on tente de réduire l'ondulation en effectuant des modifications de la ligne hydraulique par ajout et/ou retrait de parties souples et/ou rigides de la tuyauterie sans méthodologie particulière. Bien entendu, cela engendre un temps de mise au point qui n'est pas négligeable.

L'invention vise à obtenir un circuit hydraulique d'actionnement de direction assistée qui pallie les inconvénients de l'état de la technique et réduit efficacement ce phénomène d'instabilité au braquage.

A cet effet, un premier objet de l'invention est un circuit hydraulique d'actionnement de direction assistée pour véhicule automobile, le circuit comportant au moins une entrée de commande de direction et au moins une sortie de fluide hydraulique, la sortie étant destinée à appliquer une pression de fluide hydraulique à un vérin hydraulique d'assistance à la direction pour l'actionnement d'un train de direction du véhicule relié au vérin en fonction d'une commande de direction reçue sur l'entrée, le circuit comportant :

- une pompe d'alimentation en fluide hydraulique sous pression,
- au moins une première ligne de fluide hydraulique haute pression et au moins une deuxième ligne de fluide hydraulique,

- une valve distributrice de fluide hydraulique, comportant des premier et deuxième accès d'alimentation en fluide hydraulique reliés respectivement à la pompe par les première et deuxième lignes, et au moins un accès supplémentaire, qui est relié à la sortie, la valve comportant une section de passage de fluide hydraulique entre l'accès supplémentaire et le premier ou deuxième accès, qui est variable en fonction de la commande présente sur l'entrée, - un moyen de restriction de section de passage de fluide hydraulique de la pompe vers le premier accès étant prévu sur la première ligne haute pression,

caractérisé en ce que, pour
un train de direction ayant une dynamique dont le premier ordre correspond à un premier mode anti-symétrique de train de fréquence propre déterminée, le moyen de restriction est choisi pour que la fonction de transfert de la pression de la sortie par rapport au signal de commande à l'entrée ait un zéro de fréquence inférieure à cette fréquence propre de premier mode anti-symétrique de train.

Suivant d'autres caractéristiques de l'invention,

- Le moyen de restriction est formé par un élément localisé de restriction de la section de passage de la première ligne haute pression en amont du premier accès de la valve, la première ligne haute pression comprend une tuyauterie souple de fluide hydraulique ayant un volume d'expansion supérieur à une valeur prescrite entre l'élément de restriction et la pompe.
- L'élément de restriction est interposé entre l'extrémité de sortie de la première ligne haute pression, éloignée de la pompe, et le premier accès de la valve.
- Pour un train de direction ayant une dynamique dont le premier ordre correspond à un premier mode anti-symétrique de train de fréquence propre déterminée, le moyen de restriction est choisi pour que la fonction de transfert de la pression de la sortie par rapport au signal de commande à l'entrée ait un déphasage global de moins de 20 ° en valeur absolue à cette fréquence propre de premier mode anti-symétrique de train.
- Pour un train de direction ayant une dynamique dont le premier ordre correspond à un premier mode anti-symétrique de train de fréquence propre déterminée, le moyen de restriction ajoute pour cette fréquence propre de premier mode anti-symétrique de train une valeur positive au déphasage de la fonction de transfert de la pression de la sortie par rapport au signal de commande à l'entrée.
- La valeur positive ajoutée de déphasage du moyen de restriction est supérieure ou égale à 60 ° à cette fréquence propre de premier mode anti-symétrique de train.
- La fréquence du zéro de la fonction de transfert est égale à un tiers de la fréquence propre de premier mode anti-symétrique de train.

- Pour un vérin double effet, une première sortie est prévue pour appliquer une pression de fluide hydraulique sur un premier côté d'un piston du vérin et une deuxième sortie est prévue pour appliquer une pression de fluide hydraulique sur un deuxième côté d'un piston du vérin, opposé au premier côté, la valve comporte :
- un troisième accès relié à la première sortie,
- un quatrième accès relié à la deuxième sortie,
- une première branche de passage de fluide hydraulique, associée à une première restriction de section de passage entre le troisième accès et le premier accès,
- une deuxième branche de passage de fluide hydraulique, associée à une deuxième restriction de section de passage entre le troisième accès et le deuxième accès,
- une troisième branche de passage de fluide hydraulique, associée à une troisième restriction de section de passage entre le quatrième accès et le premier accès,
- une quatrième branche de passage de fluide hydraulique, associée à une quatrième restriction de section de passage entre le quatrième accès et le deuxième accès,

la section de passage de fluide hydraulique des première et quatrième restrictions ou la section de passage de fluide hydraulique des deuxième et troisième restrictions étant fonction de la commande présente sur l'entrée.

Un autre objet de l'invention est un véhicule automobile, comportant un volant de direction relié par l'intermédiaire d'une colonne de direction à une crémaillère pour commander le déplacement de la crémaillère reliée à un train de direction afin d'orienter des roues directrices reliées à ce train, la crémaillère étant reliée à au moins un vérin hydraulique d'assistance au déplacement de la crémaillère, le véhicule étant muni d'un circuit hydraulique d'actionnement de direction assistée suivant l'une quelconque des revendications précédentes, un moyen étant prévu pour appliquer en fonction de la rotation de la colonne de direction une commande de direction sur l'entrée du circuit hydraulique d'actionnement de direction assistée, le vérin étant relié à la sortie du circuit hydraulique d'actionnement pour recevoir de celle-ci une pression de fluide hydraulique pour l'actionnement du vérin en vue de déplacer la crémaillère suivant la commande de direction.

L'invention sera mieux comprise à la lecture de la description qui va suivre, donnée uniquement à titre d'exemple non limitatif en référence aux dessins annexés, sur lesquels :

- la figure 1 représente un synoptique modulaire d'une direction assistée de véhicule automobile, actionnée par un circuit hydraulique suivant l'invention,
- la figure 2 représente un schéma équivalent de la direction assistée et de son circuit hydraulique d'actionnement suivant l'invention,
- la figure 3 est un schéma équivalent d'un circuit hydraulique d'actionnement de direction assistée suivant l'état de la technique,
- la figure 4 est un schéma équivalent du circuit hydraulique d'actionnement de direction assistée suivant l'invention,
- la figure 5 est un diagramme représentant en ordonnée le module de la fonction de transfert de la sortie du circuit hydraulique d'actionnement en dB en ordonnée selon la fréquence en Hertz en abscisse, dans l'état de la technique suivant la figure 3,
- la figure 6 est un diagramme représentant en ordonnée la phase de la fonction de transfert de la sortie du circuit hydraulique d'actionnement en degrés en ordonnée selon la fréquence en Hertz en abscisse, dans l'état de la technique suivant la figure 3,
- la figure 7 est un diagramme représentant en ordonnée le module de la fonction de transfert de la sortie du circuit hydraulique d'actionnement en dB en ordonnée selon la fréquence en Hertz en abscisse, dans un exemple de réalisation de l'invention,
- la figure 8 est un diagramme représentant en ordonnée la phase de la fonction de transfert de la sortie du circuit hydraulique d'actionnement en degrés en ordonnée selon la fréquence en Hertz en abscisse, dans un exemple de réalisation de l'invention.

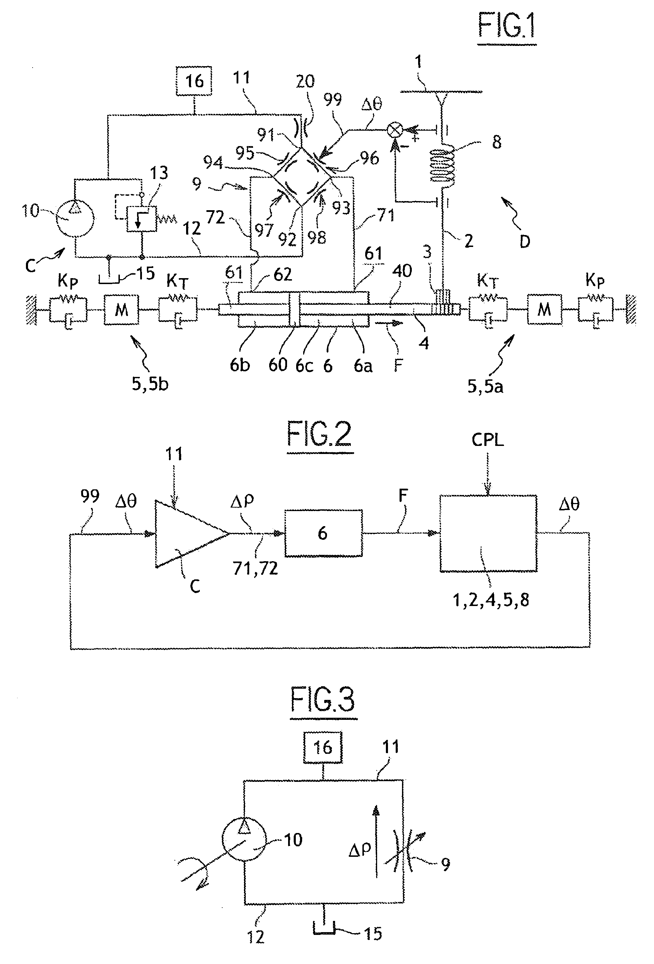

A la figure 1, le véhicule automobile comporte un volant 1 de direction faisant tourner une colonne 2 de direction, engrenant par son extrémité 3 avec une crémaillère 4, faisant partie du train 5 de direction du véhicule. Ce train 5 de direction assure la liaison au sol des roues directrices du véhicule, qui sont habituellement les deux roues droite et gauche de celui-ci sur son essieu avant. Ce train 5 de direction comporte habituellement sur chacun des deux côtés droit et gauche un demi-train 5a, 5b comportant les éléments suivants reliés mécaniquement entre-eux : un bras inférieur constitué par un triangle inférieur, un porte - fusée pour le roulement de la roue, un amortisseur, le bras inférieur étant lié à la caisse du véhicule par des liaisons élastiques, ainsi que cela est connu.

Pour braquer les roues, la crémaillère 4 doit être déplacée en translation latéralement dans le sens de la largeur du véhicule, c'est-à-dire vers la droite ou la gauche. Pour ce faire, étant donné que le couple CPL de rotation pouvant être appliqué par l'utilisateur à la colonne 2 via le volant 1 peut être relativement faible, un vérin 6 est fixé à la crémaillère 4 pour aider à son déplacement en translation dans le sens correspondant à la rotation de la colonne 2, vers la droite ou vers la gauche. Le vérin 6 est par exemple formé par un vérin double effet, comportant un piston 60 solidaire d'une tige 61, qui est reliée à la crémaillère 4 par un point 40 de fixation et qui est déplaçable vers la droite et vers la gauche dans un fût fixe 6c, selon qu'une plus grande pression de fluide hydraulique est présente sur son côté opposé gauche ou droit. Le vérin 6 comporte une première chambre 6a hydraulique droite, alimentable en fluide hydraulique via un raccord 61 par une première sortie 71 pour appliquer une force sur le premier côté droit du piston 60, ainsi qu'une deuxième chambre 6b hydraulique gauche, alimentable en fluide hydraulique via un deuxième raccord 62 par une deuxième sortie 72 pour appliquer une force sur le deuxième côté gauche du piston 60, opposé à son premier côté droit, les sorties 71, 72 étant par exemple formées par des conduites.

La colonne 2 de direction actionne également, par l'intermédiaire d'un barreau 8, une valve 9 distributrice de fluide hydraulique entre les première et deuxième sorties 71, 72. La valve 9 comporte un premier accès 91 relié au côté haute pression d'une pompe 10 de fluide hydraulique par une première ligne haute pression 11, un deuxième accès 92 relié au côté basse pression de la pompe 10 par une deuxième ligne hydraulique basse pression 12, un accès 93 de fluide hydraulique relié au premier raccord 61 par la première sortie 71 et un accès 94 de fluide hydraulique relié au deuxième raccord 62 par la deuxième sortie 72. La pompe 10 est reliée par son côté basse pression à un réservoir 15 de fluide hydraulique. La pompe 10 est associée à un limiteur 13 de pression. La pompe hydraulique 10 est attelée, c'est-à-dire entraînée par courroie par le moteur à combustion interne du véhicule automobile. La valve 9 comporte :

- entre les accès 91 et 94, une branche de passage de fluide hydraulique, associée à une restriction 95 de section de passage,
- entre les accès 91 et 93, une branche de passage de fluide hydraulique, associée à une restriction 96 de section de passage de fluide hydraulique,
- entre les accès 94 et 92, une branche de passage de fluide hydraulique, associée à une restriction 97 de section de passage de fluide hydraulique,
- entre les accès 93 et 92, une branche de passage de fluide hydraulique, associée à une restriction 98 de section de passage de fluide hydraulique.

Dans la valve 9, les restrictions 96 et 97 situées sur les branches opposées sont commandées de la même manière à partir d'une entrée 99 de commande. Par ailleurs, les deux autres restrictions 95 et 98 varient de manière identique. La pression de fluide hydraulique sur la sortie 71, 72 est variable en fonction du signal de commande présent sur l'entrée 99. Les sections de passage des restrictions 96 et 97 sont directement fonction du déplacement angulaire généré par le barreau 8 de torsion. Ce déplacement représente un décalage angulaire entre la chemise et le boisseau de la valve 9. L'entrée 99 de commande est formée par le barreau de torsion de la valve 9 pour faire varier la section de passage entre l'accès supplémentaire 93, 94 et le premier ou deuxième accès 91, 92.

Ainsi, lorsque le signal de commande appliqué sur l'entrée 99 de commande relié au barreau 8 de torsion aboutit à une section de passage de fluide hydraulique plus petite sur les restrictions 95 et 98 que sur les deux autres restrictions 96 et 97 de la valve 9, une plus grande pression de fluide hydraulique est envoyée depuis l'accès 91 à la première sortie 71 que sur la deuxième sortie 72 ce qui entraîne un déplacement du piston 60 et de la tige du vérin 6 vers la partie gauche 5b du train 5.

Au contraire, lorsque le signal de commande appliqué sur l'entrée 99 de commande par la barre 8 augmente la section de passage des restrictions 95 et 98 au-dessus de celles des deux autres restrictions 96 et 97, une plus petite pression de fluide hydraulique est envoyée depuis l'accès 91 haute pression à la première sortie 71 qu'à la deuxième sortie 72 ce qui entraîne le déplacement du piston 60 et de la tige du vérin 6 vers la partie droite 5a du train 5.

A la figure 1, l'entrée 99 de commande de la valve 9 reçoit comme signal de commande le décalage angulaire $\Delta\theta$ du barreau 8 entre le boisseau, représenté par le signe - et la chemise représentée par le signe + de la valve 9.

La figure 2 montre que la production de l'effort d'assistance par le vérin 6 résulte d'un bouclage entre la mécanique (volant 1, colonne 2 de direction, crémaillère 4, train 5, barreau 8 de torsion et couple CPL appliqué par le conducteur sur le volant 1) et le circuit hydraulique C représenté sous la forme d'un amplificateur hydraulique. Cet amplificateur hydraulique transforme le signal de commande $\Delta\theta$ appliqué sur l'entrée 99 de commande en différence de pression $\Delta P$ entre les sorties 71 et 72.

Or, le phénomène d'ondulation résulte d'une instabilité locale provoquée par le comportement dynamique du train 5. La dynamique du train 5, représentée au premier ordre par son premier mode anti-symétrique de train peut en effet devenir instable par couplage, provoqué par la contre-réaction de l'amplificateur hydraulique. Cette instabilité génère des oscillations au niveau des roues reliées au train 5 et de la colonne 2 de direction. L'utilisateur perçoit alors ces instabilités sur le volant 1.

Le train 5 des roues directrices possède un mode de résonance symétrique, dans lequel une perturbation dirigée dans le sens longitudinal du véhicule entre l'avant et l'arrière fait vibrer les roues directrices en phase, et un premier mode anti-symétrique de résonance, dans lequel une perturbation dans le sens longitudinal du véhicule fait vibrer les roues directrices en opposition de phase. C'est dans ce mode anti-symétrique de train que la vibration perturbatrice des roues directrices est transmise par la crémaillère 4 à la colonne 2 de direction et au volant 1, à une fréquence propre déterminée $f_{train}$. Cette fréquence $f_{train}$ classique du premier mode anti-symétrique de train est classiquement égale à 20Hz. Dans le mode symétrique, le train 5 comporte sur chaque demi-train 5a, 5b une raideur latérale kT de train et une raideur kP latérale pneumatique, avec une masse M ramenée de la partie mobile du train vue par la crémaillère 4.

Suivant l'invention, on réduit ces instabilités en adaptant la réponse en fréquence de l'amplificateur hydraulique.

Sans l'introduction de l'invention, l'amplificateur hydraulique C peut être modélisé suivant la figure 3.

La ligne 11 haute pression comprend une tuyauterie souple de fluide hydraulique. Le comportement dynamique de l'amplificateur hydraulique C est alors le suivant :

$$\Delta P = K(\alpha)\frac{\Delta P_0}{s + \dfrac{K(\alpha_0)}{k}}$$

avec

$\Delta P$ : Différence de pression entre les chambres 6a et 6b,

$K(\alpha)$ : Valeur de la restriction équivalente de la valve autour du point de fonctionnement,

$K(\alpha_0)$ : Valeur de la restriction équivalente de la valve au point de fonctionnement,

k : Expansion totale des tuyaux souples de la ligne 11 haute pression, indiquée par le signe de référence 16 aux figures.

$\Delta P_0$ : Constante de pression.

Le comportement est de type passe bas du premier ordre (20 dBb/décade, déphasage de -90°). La pulsation de coupure du filtre est données par $\omega_{c0} = \dfrac{K(\alpha_0)}{k}$ . Elle est fonction du point courant. D'un point de vue de la stabilité, le cas le plus critique, lorsqu'on intègre le comportement de ce filtre dans la boucle de contre-réaction, correspond à un gain statique et à une fréquence de coupure telle qu'à la fréquence propre $f_{train}$ du mode anti-symétrique de train, ce gain soit supérieur à 1 et le déphasage soit maximal (c'est-à-dire proche de -90° pour ce type de filtre). A cet instant, le risque d'instabilité sera maximal. Si il y a instabilité, le phénomène sera perçu par l'utilisateur comme une oscillation du volant avec une fréquence proche de celle du mode anti-symétrique de train.

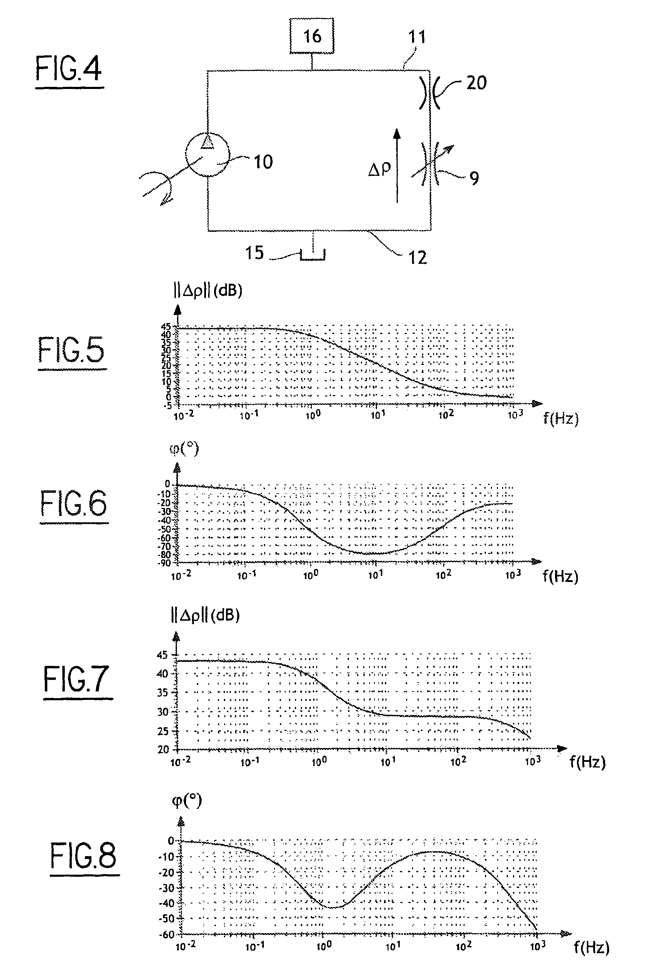

Aux figure 1 et 4, l'invention prévoit d'introduire un moyen 20 de restriction de la section de passage de fluide hydraulique sur la ligne 11 haute pression entre la pompe 10 et le premier accès 91 de la valve distributrice 9. La restriction 20 est calibrée à une valeur déterminée.

Le comportement dynamique de l'amplificateur hydraulique est alors modifié selon la fonction de transfert suivante entre les sorties 71, 72 et l'entrée 99 :

$$\Delta P = K(\alpha)\frac{\Delta P_0(ks + K_r)}{k[K(\alpha_0) + K_r]s + K(\alpha_0)K_r}$$

où $K_r$ est la valeur de la restriction supplémentaire de section de passage de fluide hydraulique du moyen 20 sur la ligne 11 haute pression entre la pompe 10 et le premier accès 91 de la valve distributrice 9.

Ce comportement est celui d'un filtre à retard de phase dont les fréquences de coupure sont données par :

-    pour le zéro : $\omega_{z1} = \dfrac{K_r}{k}$

-    et pour le pôle: $\omega_{p1} = \dfrac{K'}{k}$    avec

$$K' = \frac{K(\alpha_0)K_r}{K(\alpha_0) + K_r}$$

L'avantage de cette structure est la possibilité de choisir la restriction $K_r$ pour que l'amplificateur hydraulique ne déphase plus à des fréquences proches de celle $f_{train}$ du mode anti-symétrique de train. Pour cela, on peut par exemple choisir : $\omega_{z1} = \dfrac{\omega_{train}}{3}$ c'est-à-dire

$$K_r = k * \frac{\omega_{train}}{3}, \text{ où } \omega_{train} = 2.\Pi.f_{train}$$

Aux figures 5 à 8, $\|\Delta P\|$ représente le module de la fonction de transfert de l'amplificateur hydraulique C, φ désigne la phase de cette fonction de transfert et f désigne la fréquence.

Les figures 5 et 6 montrent le cas d'un circuit hydraulique suivant l'état de la technique, dans lequel la valeur moyenne de ΔP est de 40 bars. Aux figures 5 et 6, à la fréquence $f_{train}$ de mode anti-symétrique de train de 20 Hz, le gain $\|\Delta P\|$ est encore de 15 dB et la phase φ est de -80°.

Les figures 7 et 8 montrent l'exemple d'une restriction $K_r$, placée en amont de la valve distributrice, pour corriger la phase de l'amplificateur hydraulique à la fréquence $f_{train}$ de mode anti-symétrique de train de 20 Hz, par rapport à aux figures 5 et 6. Aux figures 7 et 8, à la fréquence $f_{train}$ de mode anti-symétrique de train de 20 Hz, le gain $\|\Delta P\|$ est de 28 dB et la phase φ est de -10°.

Le positionnement de la restriction 20 détermine l'expansion 16 des tuyaux souples devant être prise en compte (valeur du paramètre k). En d'autres termes, si on veut une dissipation maximale de l'énergie aux bornes de la restriction $K_r$, à une fréquence f égale au mode $f_{train}$ anti-symétrique de train, il faut placer la restriction 20 pour que le paramètre k (expansion des tuyaux perçue en amont de la restriction) soit tel que la pulsation

$$\omega_{p1} = \frac{K'}{k} \quad \text{avec} \quad K' = \frac{K(\alpha_0)K_r}{K(\alpha_0) + K_r} \quad \text{soit bien infé-}$$

rieur à la fréquence dudit mode, la limite inférieure étant donnée par l'acceptabilité de la prestation d'assistance (absence d'effet de mur, dynamique insuffisante). Par exemple, la fréquence du pôle $\omega_{p1}$ est inférieure d'au moins une décade à la fréquence $f_{train}$.

En règle générale, cela correspond à avoir le maximum de tuyauterie souple 16 en amont de la restriction 20. La restriction 20 est par exemple disposée immédiatement entre l'accès 91 haute pression et la ligne 11.

Cette condition garantit que l'énergie dissipée ne dépend que de la différence de pression $\Delta P$ entre chambres 6a, 6b à la fréquence $f_{train}$ du mode anti-symétrique de train et de la restriction $K_r$ choisie.

Dans un mode de réalisation de l'invention, $\varphi$ $(f_{train}) \geq -20°$.

Dans un mode de réalisation de l'invention, la restriction 20 ajoutée rehausse le déphasage à la fréquence $t_{train}$ du mode anti-symétrique de train d'au moins 60°, c'est-à-dire avec la correction appliquée par la restriction supplémentaire 20 à la figure 4 par rapport au cas non corrigé de la figure 3.

## Revendications

1.  Circuit hydraulique d'actionnement de direction assistée pour véhicule automobile, le circuit (C ) comportant au moins une entrée (99) de commande de direction et au moins une sortie (71, 72) de fluide hydraulique, la sortie (71, 72) étant destinée à appliquer une pression de fluide hydraulique à un vérin (6) hydraulique d'assistance à la direction pour l'actionnement d'un train (5) de direction du véhicule relié au vérin (6) en fonction d'une commande de direction reçue sur l'entrée (99),
    le circuit (C ) comportant :

      - une pompe (10) d'alimentation en fluide hydraulique sous pression,
      - au moins une première ligne (11) de fluide hydraulique haute pression et au moins une deuxième ligne (12) de fluide hydraulique,
      - une valve (9) distributrice de fluide hydraulique, comportant des premier et deuxième accès (91, 92) d'alimentation en fluide hydraulique reliés respectivement à la pompe (10) par les première et deuxième lignes (11, 12), et au moins un accès (93, 94) supplémentaire, qui est relié à la sortie (71, 72), la valve comportant une section de passage de fluide hydraulique entre l'accès (93, 94) supplémentaire et le premier ou deuxième accès (91, 92), qui est variable en fonction de la commande présente sur l'entrée (99), un moyen (20) de restriction de section de passage de fluide hydraulique de la pompe (10) vers le premier accès (91) étant prévu sur la première ligne haute pression (11),

    **caractérisé en ce que**
    pour un train (5) de direction ayant une dynamique dont le premier ordre correspond à un premier mode anti-symétrique de train de fréquence propre déterminée, le moyen (20) de restriction est choisi pour que la fonction de transfert de la pression de la sortie (71, 72) par rapport au signal de commande à l'entrée (99) ait un zéro de fréquence inférieure à cette fréquence propre de premier mode anti-symétrique de train.

2.  Circuit hydraulique d'actionnement de direction assistée suivant la revendication 1, **caractérisé en ce que** le moyen (20) de restriction est formé par un élément localisé de restriction de la section de passage de la première ligne haute pression (11) en amont du premier accès (91) de la valve (9), la première ligne haute pression (11) comprend une tuyauterie souple de fluide hydraulique ayant un volume (16) d'expansion supérieur à une valeur prescrite entre l'élément (20) de restriction et la pompe (10).

3.  Circuit hydraulique d'actionnement de direction assistée suivant la revendication 2, **caractérisé en ce que** l'élément (20) de restriction est interposé entre l'extrémité de sortie de la première ligne haute pression (11), éloignée de la pompe (10), et le premier accès (91) de la valve (9).

4.  Circuit hydraulique d'actionnement de direction assistée suivant l'une quelconque des revendications précédentes, **caractérisé en ce que** pour un train (5) de direction ayant une dynamique dont le premier ordre correspond à un premier mode anti-symétrique de train de fréquence propre déterminée, le moyen (20) de restriction est choisi pour que la fonction de transfert de la pression de la sortie (71, 72) par rapport au signal de commande à l'entrée (99) ait un déphasage global de moins de 20 ° en valeur absolue à cette fréquence propre de premier mode anti-symétrique de train.

5.  Circuit hydraulique d'actionnement de direction assistée suivant l'une quelconque des revendications précédentes, **caractérisé en ce que** pour un train (5) de direction ayant une dynamique dont le premier ordre correspond à un premier mode anti-symétrique de train de fréquence propre déterminée, le moyen (20) de restriction ajoute pour cette fréquence propre de premier mode anti-symétrique de train une valeur positive au déphasage de la fonction de transfert de la pression de la sortie (71, 72) par rapport au signal de commande à l'entrée (99).

6. Circuit hydraulique d'actionnement de direction assistée suivant la revendication 5, **caractérisé en ce que** la valeur positive ajoutée de déphasage du moyen (20) de restriction est supérieure ou égale à 60 ° à cette fréquence propre de premier mode anti-symétrique de train.

7. Circuit hydraulique d'actionnement de direction assistée suivant l'une quelconque des revendications précédentes, **caractérisé en ce que** ladite restriction (20) est calibrée à une valeur déterminée.

8. Circuit hydraulique d'actionnement de direction assistée suivant l'une quelconque des revendications précédentes, **caractérisé en ce que** la fréquence du zéro ($\omega_{z1}$) de la fonction de transfert est égale à un tiers de la fréquence propre de premier mode anti-symétrique de train.

9. Circuit hydraulique d'actionnement de direction assistée suivant l'une quelconque des revendications précédentes, **caractérisé en ce que** pour un vérin (6) double effet, une première sortie (71) est prévue pour appliquer une pression de fluide hydraulique sur un premier côté (6a) d'un piston (60) du vérin (6) et une deuxième sortie (72) est prévue pour appliquer une pression de fluide hydraulique sur un deuxième côté (6b) d'un piston (60) du vérin (6), opposé au premier côté (6a), la valve (9) comporte :

    - un troisième accès (93) relié à la première sortie (71),
    - un quatrième accès (94) relié à la deuxième sortie (72),
    - une première branche de passage de fluide hydraulique, associée à une première restriction (96) de section de passage entre le troisième accès (93) et le premier accès (91),
    - une deuxième branche de passage de fluide hydraulique, associée à une deuxième restriction (98) de section de passage entre le troisième accès (93) et le deuxième accès (92),
    - une troisième branche de passage de fluide hydraulique, associée à une troisième restriction (95) de section de passage entre le quatrième accès (94) et le premier accès (91),
    - une quatrième branche de passage de fluide hydraulique, associée à une quatrième restriction (97) de section de passage entre le quatrième accès (94) et le deuxième accès (92),

la section de passage de fluide hydraulique des première et quatrième restrictions (96, 97) ou la section de passage de fluide hydraulique des deuxième et troisième restrictions (98, 95) étant fonction de la commande présente sur l'entrée (99).

10. Véhicule automobile, comportant un volant (1) de direction relié par l'intermédiaire d'une colonne (2) de direction à une crémaillère (4) pour commander le déplacement de la crémaillère (4) reliée à un train (5) de direction afin d'orienter des roues directrices reliées à ce train (5), la crémaillère (4) étant reliée à au moins un vérin (6) hydraulique d'assistance au déplacement de la crémaillère (4), le véhicule étant muni d'un circuit (C ) hydraulique d'actionnement de direction assistée suivant l'une quelconque des revendications précédentes, un moyen (8) étant prévu pour appliquer en fonction de la rotation de la colonne (2) de direction une commande de direction sur l'entrée (99) du circuit (C ) hydraulique d'actionnement de direction assistée, le vérin (6) étant relié à la sortie (71, 72) du circuit hydraulique (C ) d'actionnement pour recevoir de celle-ci une pression de fluide hydraulique pour l'actionnement du vérin (6) en vue de déplacer la crémaillère (4) suivant la commande de direction.

**Claims**

1. Power-assisted steering hydraulic actuation circuit for motor vehicles, the circuit (C) comprising at least one steering command input (99) and at least one hydraulic fluid output (71, 72), the output (71, 72) being intended to apply a hydraulic fluid pressure on a power-steering hydraulic cylinder (6) in order to actuate a steering train (5) of the vehicle linked to the cylinder (6) according to a steering command received on the input (99), the circuit (C) comprising:

    - a pump (10) feeding hydraulic fluid under pressure,
    - at least one first high-pressure hydraulic fluid line (11) and at least one second hydraulic fluid line (12),
    - a valve (9) distributing hydraulic fluid comprising first and second hydraulic fluid feed ports (91, 92) respectively linked to the pump (10) by the first and second lines (11, 12), and at least one additional port (93, 94), which is linked to the output (71, 72), the valve having a hydraulic fluid flow section between the additional port (93, 94) and the first or second port (91, 92), which is variable according to the command present on the input (99), a means (20) of restricting the hydraulic fluid flow section from the pump (10) to the first port (91) being provided on the first high-pressure line (11),

**characterized in that**
for a steering train (5) having dynamics of which the first order corresponds to a first antisymmetric train mode of determined natural frequency, the restriction means (20) is chosen so that the pressure transfer function of the output (71, 72) relative to the command signal at the input (99) has a frequency zero below this first antisymmetrical train mode natural frequency.

2. Power-assisted steering hydraulic actuation circuit according to Claim 1, **characterized in that** the restriction means (20) is formed by a localized element for restricting the flow section of the first high-pressure line (11) upstream of the first port (91) of the valve (9), and the first high-pressure line (11) comprises a flexible hydraulic fluid pipe having an expansion volume (16) greater than a prescribed value between the restriction element (20) and the pump (10).

3. Power-assisted steering hydraulic actuation circuit according to Claim 2, **characterized in that** the restriction element (20) is interposed between the output end of the first high-pressure line (11), remote from the pump (10), and the first port (91) of the valve (9).

4. Power-assisted steering hydraulic actuation circuit according to any one of the preceding claims, **characterized in that**, for a steering train (5) having dynamics of which the first order corresponds to a first antisymmetrical train mode of determined natural frequency, the restriction means (20) is chosen so that the pressure transfer function of the output (71, 72) relative to the command signal at the input (99) has an overall phase shift of less than 20° as an absolute value at this first antisymmetrical train mode natural frequency.

5. Power-assisted steering hydraulic actuation circuit according to any one of the preceding claims, **characterized in that**, for a steering train (5) having dynamics of which the first order corresponds to a first antisymmetric train mode of determined natural frequency, the restriction means (20) adds, for this first antisymmetric train mode natural frequency, a positive value to the phase shift of the pressure transfer function of the output (71, 72) relative to the command signal at the input (99).

6. Power-assisted steering hydraulic actuation circuit according to Claim 5, **characterized in that** the positive phase shift value added by the restriction means (20) is greater than or equal to 60° at this first antisymmetric train mode natural frequency.

7. Power-assisted steering hydraulic actuation circuit according to any one of the preceding claims, **characterized in that** said restriction (20) is calibrated to a determined value.

8. Power-assisted steering hydraulic actuation circuit according to any one of the preceding claims, **characterized in that** the zero frequency ($\omega_{z1}$) of the transfer function is equal to a third of the first antisymmetric train mode natural frequency.

9. Power-assisted steering hydraulic actuation circuit according to any one of the preceding claims, **characterized in that**, for a dual-acting cylinder (6), a first output (71) is provided to apply a hydraulic fluid pressure to a first side (6a) of a piston (60) of the cylinder (6) and a second output (72) is provided to apply a hydraulic fluid pressure to a second side (6b) of a piston (60) of the cylinder (6), opposite to the first side (6a),
the valve (9) comprises:

   - a third port (93) linked to the first output (71),
   - a fourth port (94) linked to the second output (72),
   - a first hydraulic fluid flow branch, associated with a first flow section restriction (96) between the third port (93) and the first port (91),
   - a second hydraulic fluid flow branch, associated with a second flow section restriction (98) between the third port (93) and the second port (92),
   - a third hydraulic fluid flow branch, associated with a third flow section restriction (95) between the fourth port (94) and the first port (91),
   - a fourth hydraulic fluid flow branch, associated with a fourth flow section restriction (97) between the fourth port (94) and the second port (92),

the hydraulic fluid flow section of the first and fourth restrictions (96, 97) or the hydraulic fluid flow section of the second and third restrictions (98, 95) being dependent on the command present at the input (99).

10. Motor vehicle, comprising a steering wheel (1) linked via a steering column (2) to a rack (4) to control the displacement of the rack (4) linked to a steering train (5) in order to orient the drive wheels linked to this train (5),
the rack (4) being linked to at least one hydraulic cylinder (6) assisting in the displacement of the rack (4),
the vehicle being provided with a power-assisted steering hydraulic actuation circuit (C) according to any one of the preceding claims,

a means (8) being provided to apply, according to the rotation of the steering column (2), a steering command to the input (99) of the power-assisted steering hydraulic actuation circuit (C),

the cylinder (6) being linked to the output (71, 72) of the hydraulic actuation circuit (C) in order to receive from said output a hydraulic fluid pressure to actuate the cylinder (6) in order to displace the rack (4) according to the steering command.

**Patentansprüche**

1. Hydraulische Servolenkung-Betätigungsschaltung für ein Kraftfahrzeug, wobei die Schaltung (C) mindestens einen Lenksteuereingang (99) und mindestens einen Hydraulikfluidausgang (71, 72) aufweist, wobei der Ausgang (71, 72) dazu bestimmt ist, einen Hydraulikfluiddruck an einen hydraulischen Lenkhilfezylinder (6) zur Betätigung einer mit dem Zylinder (6) verbundenen Lenkachse (5) des Fahrzeugs in Abhängigkeit von einer am Eingang (99) empfangenen Lenksteuerung anzuwenden, wobei die Schaltung (C) aufweist:

   - eine Pumpe (10) zur Versorgung mit Hydraulikfluid unter Druck,
   - mindestens eine erste Hochdruck-Hydraulikfluidleitung (11) und mindestens eine zweite Hydraulikfluidleitung (12),
   - ein Ventil (9) zur Ausgabe von Hydraulikfluid, das erste und zweite Zugänge (91, 92) zur Versorgung mit Hydraulikfluid, die über die ersten und zweiten Leitungen (11, 12) mit der Pumpe (10) verbunden sind, und mindestens einen zusätzlichen Zugang (93, 94) aufweist, der mit dem Ausgang (71, 72) verbunden ist, wobei das Ventil einen Hydraulikfluid-Durchgangsquerschnitt zwischen dem zusätzlichen Zugang (93, 94) und dem ersten oder zweiten Zugang (91, 92) hat, der in Abhängigkeit von der am Eingang (99) vorhandenen Steuerung variabel ist, wobei eine Einrichtung (20) zum Drosseln des Hydraulikfluid-Durchgangsquerschnitts von der Pumpe (10) zum ersten Zugang (91) auf der ersten Hochdruckleitung (11) vorgesehen ist,

   **dadurch gekennzeichnet, dass**
   für eine Lenkachse (5) mit einer Dynamik, deren erste Ordnung einer ersten antisymmetrischen Achsbetriebsart mit bestimmter Eigenfrequenz entspricht, die Drosseleinrichtung (20) so gewählt wird, dass die Transferfunktion des Drucks des Ausgangs (71, 72) bezüglich des Steuersignals am Eingang (99) einen Nullpunkt einer Frequenz geringer als diese Eigenfrequenz der ersten antisymmetrischen Achsbetriebsart hat.

2. Hydraulische Servolenkung-Betätigungsschaltung nach Anspruch 1, **dadurch gekennzeichnet, dass** die Drosseleinrichtung (20) von einem lokalisierten Drosselelement des Durchgangsquerschnitts der ersten Hochdruckleitung (11) vor dem ersten Zugang (91) des Ventils (9) gebildet wird, die erste Hochdruckleitung (11) eine elastische Hydraulikfluidrohrleitung enthält, die ein Ausdehnungsvolumen (16) größer als ein vorgeschriebener Wert zwischen dem Drosselelement (20) und der Pumpe (10) hat.

3. Hydraulische Servolenkung-Betätigungsschaltung nach Anspruch 2, **dadurch gekennzeichnet, dass** das Drosselelement (20) zwischen das von der Pumpe (10) entfernte Ausgangsende der ersten Hochdruckleitung (11) und den ersten Zugang (91) des Ventils (99 eingefügt ist (9).

4. Hydraulische Servolenkung-Betätigungsschaltung nach einem der vorhergehenden Ansprüche, **dadurch gekennzeichnet, dass** für eine Lenkachse (5) mit einer Dynamik, deren erste Ordnung einer ersten antisymmetrischen Achsbetriebsart mit bestimmter Eigenfrequenz entspricht, die Drosseleinrichtung (20) so gewählt wird, dass die Transferfunktion des Drucks des Ausgangs (71, 72) bezüglich des Steuersignals am Eingang (99) eine globale Phasenverschiebung von weniger als 20° im Absolutwert zu dieser Eigenfrequenz der ersten antisymmetrischen Achsbetriebsart hat.

5. Hydraulische Servolenkung-Betätigungsschaltung nach einem der vorhergehenden Ansprüche, **dadurch gekennzeichnet, dass** für eine Lenkachse (5) mit einer Dynamik, deren erste Ordnung einer ersten antisymmetrischen Achsbetriebsart mit bestimmter Eigenfrequenz entspricht, die Drosseleinrichtung (20) für diese Eigenfrequenz einer ersten antisymmetrischen Achsbetriebsart einen positiven Wert zur Phasenverschiebung der Transferfunktion des Drucks des Ausgangs (71, 72) bezüglich des Steuersignals am Eingang (99) hinzufügt.

6. Hydraulische Servolenkung-Betätigungsschaltung nach Anspruch 5, **dadurch gekennzeichnet, dass** der hinzugefügte positive Phasenverschiebungswert der Drosseleinrichtung (20) höher als oder gleich 60° zu dieser Eigenfrequenz einer ersten antisymmetrischen Achsbetriebsart ist.

7. Hydraulische Servolenkung-Betätigungsschaltung nach einem der vorhergehenden Ansprüche, **dadurch gekennzeichnet, dass** die Drosselung (20) auf einen bestimmten Wert kalibriert ist.

8. Hydraulische Servolenkung-Betätigungsschaltung nach einem der vorhergehenden Ansprüche, **dadurch gekennzeichnet, dass** die Frequenz des

Nullpunkts ($\omega_{z1}$) der Transferfunktion gleich einem Drittel der Eigenfrequenz der ersten antisymmetrischen Achsbetriebsart ist.

9. Hydraulische Servolenkung-Betätigungsschaltung nach einem der vorhergehenden Ansprüche, **dadurch gekennzeichnet, dass** für einen doppeltwirkenden Zylinder (6) ein erster Ausgang (71) vorgesehen ist, um einen Hydraulikfluiddruck auf eine erste Seite (6a) eines Kolbens (60) des Zylinders (6) anzuwenden, und ein zweiter Ausgang (72) vorgesehen ist, um einen Hydraulikfluiddruck auf eine zweite Seite (6b) eines Kolbens (60) des Zylinders (6) entgegengesetzt zur ersten Seite (6a) anzuwenden,
   wobei das Ventil (9) aufweist:

   - einen dritten Zugang (93), der mit dem ersten Ausgang (71) verbunden ist,
   - einen vierten Zugang (94), der mit dem zweiten Ausgang (72) verbunden ist,
   - eine ersten Hydraulikfluid-Durchgangszweig, der einer ersten Durchgangsquerschnitt-Drosselung (96) zwischen dem dritten Zugang (93) und dem ersten Zugang (91) zugeordnet ist,
   - eine zweiten Hydraulikfluid-Durchgangszweig, der einer zweiten Durchgangsquerschnitt-Drosselung (98) zwischen dem dritten Zugang (93) und dem zweiten Zugang (92) zugeordnet ist,
   - eine dritten Hydraulikfluid-Durchgangszweig, der einer dritten Durchgangsquerschnitt-Drosselung (95) zwischen dem vierten Zugang (94) und dem ersten Zugang (91) zugeordnet ist,
   - eine vierten Hydraulikfluid-Durchgangszweig, der einer vierten Durchgangsquerschnitt-Drosselung (97) zwischen dem vierten Zugang (94) und dem zweiten Zugang (92) zugeordnet ist,

   wobei der Hydraulikfluid-Durchgangsquerschnitt der ersten und vierten Drosselungen (96, 97) oder der Hydraulikfluid-Durchgangsquerschnitt der zweiten und dritten Drosselungen (98, 95) von der am Eingang (99) vorhandenen Steuerung abhängt.

10. Kraftfahrzeug, das ein Lenkrad (1) aufweist, das über eine Lenkstange (2) mit einer Zahnstange (4) verbunden ist, um die Verschiebung der Zahnstange (4) zu steuern, die mit einer Lenkachse (5) verbunden ist, um mit dieser Achse (5) verbundene gelenkte Räder auszurichten,
    wobei die Zahnstange (4) mit mindestens einem Hydraulikzylinder (6) zur Unterstützung der Verschiebung der Zahnstange (4) verbunden ist,
    wobei das Fahrzeug mit einer hydraulischen Servolenkung-Betätigungsschaltung (C) nach einem der vorhergehenden Ansprüche versehen ist,
    wobei eine Einrichtung (8) vorgesehen ist, um in Abhängigkeit von der Drehung der Lenkstange (2) eine Lenksteuerung an den Eingang (99) der hydraulischen Servolenkung-Betätigungsschaltung (C) anzuwenden,
    wobei der Zylinder (6) mit dem Ausgang (71, 72) der hydraulischen Betätigungsschaltung (C) verbunden ist, um von dieser einen Hydraulikfluiddruck zur Betätigung des Zylinders (6) zum Verschieben der Zahnstange (4) gemäß der Lenksteuerung zu empfangen.

EP 2 158 116 B1

## FIG.1

## FIG.2

## FIG.3

FIG.4

FIG.5

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1234748 A1